# EUROPEAN PATENT APPLICATION

(11) **EP 4 600 026 A1**
(43) Date of publication of application: **13.08.2025**
(21) Application number: 24157030.8
(22) Date of filing: 12.02.2024
(51) Int. Cl.: B29C 65/48, B29C 65/78, B60Q 1/00, B60Q 1/04, F21S 45/00

(54) **METHOD AND SYSTEM FOR MOUNTING SHOCKPROOF CUSHIONING COMPONENTS ON AN AUTOMOTIVE LIGHTING APPLIANCE**

(71) Applicant: MARELLI AUTOMOTIVE LIGHTING ITALY S.p.A., 10078 Venaria Reale (TO) (IT)
(72) Inventor: Candido, Christian, 33028 Tolmezzo (UD) (IT); Corradina, Luca, 33028 Tolmezzo (UD) (IT); Cosano, Giuliano, 33028 Tolmezzo (UD) (IT); Polo, Fabio, 33028 Tolmezzo (UD) (IT)
(74) Representative: Studio Torta S.p.A.

(57) **Abstract**

A method for mounting shockproof cushioning components comprising the steps of unwinding a tape-like film and moving it forward towards a pick-up station, stopping the forward movement of the film when an end row is detected to have reached a pre-established pick-up position, selectively picking up a shockproof cushioning component from the pre-established end row using a gripping device fitted with a pneumatic gripping head which sucks the shockproof cushioning component, and arranging the gripping device so that the adhesive face of the shockproof cushioning component loaded on the gripping head rests on the lamp body of the automotive lighting appliance in a mounting position.

## Description

### TECHNICAL FIELD

The present invention relates to a method and a system for mounting shockproof cushioning components on an automotive lighting appliance.

In particular, the present invention relates to the semi-automatic and/or automatic mounting of shockproof cushioning components on the external contact surfaces of an automotive lighting appliance, to which the following discussion will make explicit reference without thereby losing generality.

### BACKGROUND

As is well known, when a lamp body of an automotive lighting appliance is mounted in the respective housing seat obtained in the body of the motor vehicle, it has points of contact with the seat itself. The contact between the body and the lamp body exposes the latter to mechanical stresses, such as vibrations, which are transmitted to the lamp body by the motor vehicle during its operation/use. Prolonged and/or high amplitude vibrations can cause damage to the lamp body or its internal electronic components.

In order to prevent the above-mentioned drawbacks, shockproof cushioning components, which are structured so as to attenuate the mechanical stresses and vibrations transmitted by the body to the lamp body, are applied at the points of contact between the lamp body and the body shell.

Shockproof cushioning components commonly used in automotive lighting appliances comprise rubber pads. The rubber pad generally consists of a body of elastic material which has a plate-like shape and two opposite contact faces, one face having an adhesive layer fixing the rubber pad to the lamp body, the opposite face resting on the housing seat.

The application of the plate-like rubber pads to the automotive lighting appliance is usually carried out manually by an operator, along a dedicated line for mounting the automotive lighting appliance.

At present, this manual mounting operation has a number of technical problems, some of which are described in the following discussion.

A first technical issue is the long time required to carry out the aforementioned operation for fixing the rubber pad. The operator, in fact, must carefully separate the adhesive rubber pad from a support tape and apply it to the lamp body in a pre-established position. The particularly small size of the rubber pad, generally in the order of a few millimetres, increases the complexity of both the manual operation of separating and picking up the adhesive rubber pad from the support tape and the operation of applying the adhesive rubber pad to the lamp body with the required precision.

In addition, as the adhesive rubber pad is generally placed close to other rubber pads, the selective gripping of the individual rubber pad is a complex operation. It is often the case that, when picking up the individual rubber pad, the operator has difficulty separating it from the rubber pads surrounding it and accidentally picks up a few of them. In this case, the operator is forced to manually separate the excess rubber pads from the selected rubber pad, resulting in an increase in the time for the mounting thereof, as well as in some cases the discarding of the excess rubber pads.

A second technical issue occurs when, during the handling of a rubber pad, the operator accidentally touches the adhesive layer, thereby compromising the ability to fix it to the lamp body. In case of incomplete fixing, the rubber pad tends to detach from the lamp body, exposing it to the risk of damage.

### DESCRIPTION OF THE INVENTION

The object of the present invention is therefore to provide a system and a method for mounting shockproof cushioning components on an automotive lighting appliance, which at least overcome the technical issues described above.

In accordance with this object, according to the present invention, a system for mounting shockproof cushioning components on an automotive lighting appliance is provided, as defined in the related independent claims, and preferably, but not necessarily, in any one of the claims dependent thereon.

A method for mounting shockproof cushioning components on an automotive lighting appliance is also provided, as defined in the related independent claims, and preferably, but not necessarily, in any one of the claims dependent thereon.

The claims describe preferred embodiments of the present invention and form an integral part of the present specification.

### BRIEF DESCRIPTION OF THE DRAWINGS

The present invention will now be described with reference to the accompanying drawings, which illustrate a non-limiting embodiment thereof, wherein:
Figure 1 is a perspective view of a system for mounting shockproof cushioning components on an automotive lighting appliance, manufactured according to the teachings of the present invention,
Figure 2 is a side elevation perspective view of the system for mounting shockproof cushioning components on an automotive lighting appliance shown in Figure 1,
Figure 3 is a rear perspective view of a lamp body of an automotive lighting appliance showing a couple of shockproof cushioning components,
Figure 4 is an enlarged scale front view of a part of the system for mounting shockproof cushioning components on an automotive lighting appliance shown in Figure 1,
Figure 5 is an enlarged side elevation perspective view of a part of the system for mounting shockproof cushioning components on an automotive lighting appliance shown in Figure 1,
Figure 6 is an enlarged scale front view of a part of the system for mounting shockproof cushioning components on an automotive lighting appliance shown in Figure 1,
Figure 7 is an enlarged scale perspective view of the gripping device of the system for mounting shockproof cushioning components on an automotive lighting appliance shown in Figure 1,
Figure 8 is an enlarged scale perspective view of the gripping head of the gripping device of the system for mounting shockproof cushioning components on an automotive lighting appliance shown in Figure 1,
Figure 9 shows a vertical section of the gripping device of the system for mounting shockproof cushioning components on an automotive lighting appliance shown in Figure 1,
Figure 10 is an enlarged scale perspective view of a gripping device according to an alternative embodiment,
Figure 11 is a partially sectional and enlarged scale perspective view of the gripping device shown in Figure 10 according to a first operating condition,
Figure 12 is a partially sectional and enlarged scale perspective view of the gripping device shown in Figure 10 according to a second operating condition,
Figures 13, 14 and 15 are respective, enlarged scale perspective views of a gripping head of a gripping device manufactured according to respective alternative embodiments,
Figure 16 shows a system for mounting shockproof cushioning components on an automotive lighting appliance manufactured according to an alternative embodiment in which the gripping device 16 is moved by a robotic arm.

### DESCRIPTION OF EMBODIMENTS

The present invention will now be described in detail with reference to the accompanying drawings in order to allow a skilled person to implement it and use it. Various modifications to the described embodiments will be readily apparent to those skilled in the art and the general principles described may be applied to other embodiments and applications without however departing from the protective scope of the present invention as defined in the attached claims. Therefore, the present invention should not be construed as limited to the embodiments described and illustrated herein, but it must be given the broadest protective scope consistent with the principles and features described and claimed herein.

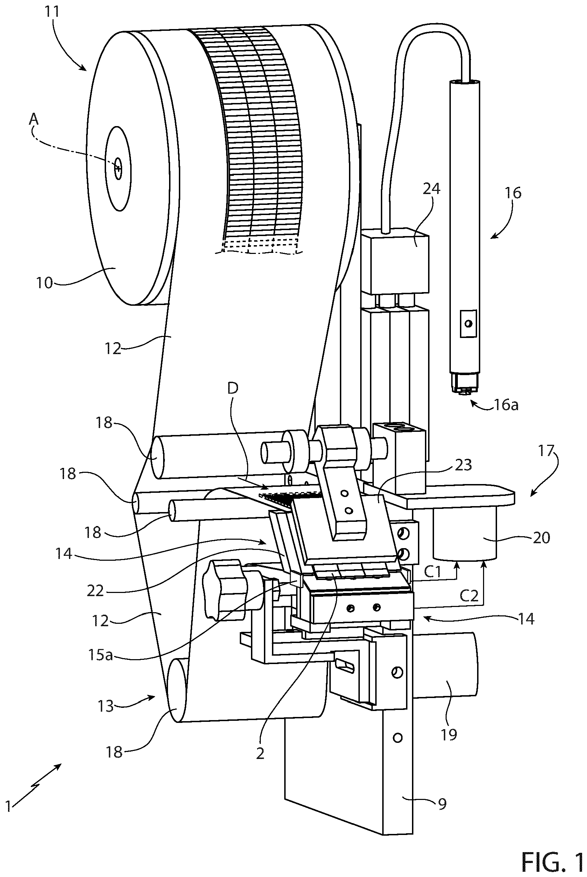

With reference to Figures 1, 2 and 3, the numeral 1 indicates, as a whole, a system for installing/mounting one or more shockproof components 2 in an automotive lighting appliance 3. The automotive lighting appliance 3 is configured so that it is installed/mounted in a motor vehicle (not shown) outside thereof. According to the present invention, the term "motor vehicle" refers to a car, a truck, a coach, or similar vehicles.

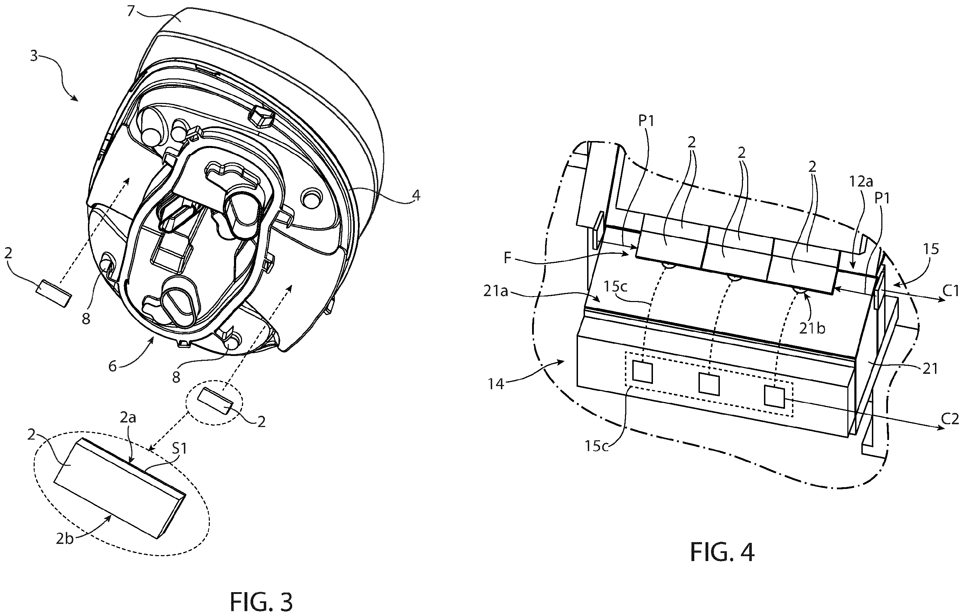

In the example shown in Figure 3, the automotive lighting appliance 3 is a rear lamp of the motor vehicle. However, it is understood that the present invention is not to be construed as limited to a rear lamp of a motor vehicle, but may be applied, additionally and/or alternatively, to any other type of lamp of the motor vehicle such as, for example, a front lamp (a motor vehicle headlamp), or a side lamp of the motor vehicle.

With reference to Figure 3, the automotive lighting appliance 3 may include a lamp body 4 forming the outer casing of the lamp, and a lighting device (not shown) which is arranged inside the lamp body 4. The lighting device (not shown) may be equipped with one or more electronic and/or electrical circuits and one or more light sources. Preferably, the light sources may comprise, for example, LED light sources or the like. More preferably, the LED light sources may comprise mini-LEDs and/or micro-LEDs.

According to a possible embodiment, the lamp body 4 may comprise a rear shell 6 and one or more front lenticular bodies 7. According to a possible embodiment shown in Figure 3, the shell 6 can be shaped preferably, but not necessarily, in the shape of a cup. The shell 6 may be structured to be recessed within a compartment created in the vehicle body. The front lenticular body 7 may be made, for example, at least partially of a transparent or semitransparent material and is structured so that it can be coupled to the shell 6 in order to close the opening of the cup-shaped body.

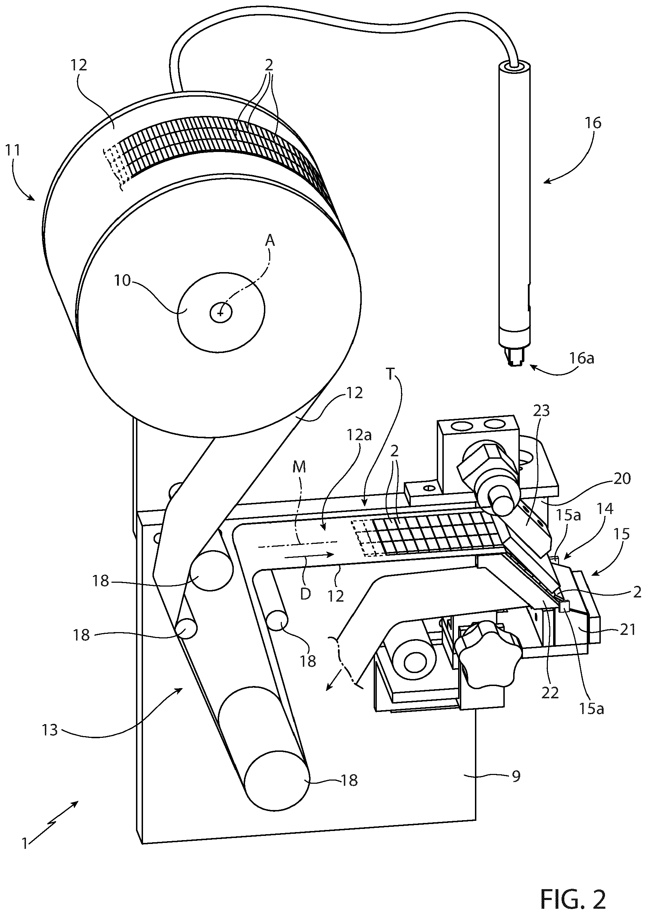

According to the present invention, the automotive lighting appliance 3 further comprises one or more shockproof cushioning components 2 shown schematically in the accompanying figures, particularly in Figure 2. The shockproof components 2 are structured so that they are firmly fixed to respective pre-established mounting areas 8 of the lamp body 4. Preferably, the mounting areas 8 are arranged on the outer surface of the lamp body 4 intended to be close to/adjacent to the inner surface of the relevant housing compartment of the motor vehicle.

According to a preferred, but not exclusive, embodiment shown in Figure 3, the shockproof component 2 may include a plate-like body, i.e., a plate. Preferably, the shockproof component 2 can have a circular or polygonal perimeter, e.g., a quadrangular perimeter. More preferably, the shockproof component 2 has a rectangular or square perimeter.

Preferably, the shockproof component 2 can be made of a cushioning material and have a reduced thickness, i.e. be thin (a size in the order of one millimetre). More preferably, the cushioning material comprises an elastic material. Even more preferably, the cushioning material can be rubber-based or any similar elastic material. For example, the shockproof component 2 can be a rubber pad.

According to a preferred, but not exclusive, embodiment, the shockproof component 2 has a face 2a on which there is a layer of adhesive material S1 (adhesive face). According to a preferred, but not exclusive, embodiment (Figure 4), the shockproof component 2 also has a face 2b (the cushioning face), opposite the face 2a, which, in use, i.e. when mounted on the lamp, substantially contacts or rests, for example, against the inner surface of the relevant housing compartment of the motor vehicle.

According to a preferred, but not exclusive, embodiment, the face 2a of the shockproof component 2 is fixed, via the adhesive layer, to the relevant mounting area 8 of the lamp body 4.

With reference to the embodiment shown in Figures 1 and 2, the system 1 can comprise a support frame 9. In the example shown, the support frame 9 supports a reel 10 on which a spool 11 is mounted so that it can rotate around an axis A. According to the present invention, the spool 11 comprises: a film 12 formed by a flexible tape, which is wound around the axis A of the reel 10 so as to form an unwindable roll, and shockproof components 2.

According to a preferred, but not exclusive, embodiment shown in Figures 1, 2 and 6, the film 12 has a face 12a arranged on the upper part. The shockproof components 2 are arranged on the face 12a of the film 12 side by side, so as to form a plurality of adjacent rows (or lines). The rows of shockproof components 2 are arranged parallel to each other, one after the other, each extending transversely to a middle line or longitudinal axis M of the film 12. The shockproof components 2 are (adhesively) coupled to the face 12a of the film 12 so that they can be easily detached/separated therefrom.

According to a preferred, but not exclusive, embodiment shown in Figures 1, 2 and 6, each row comprises the same number of shockproof components 2 as the adjacent rows. According to a preferred, but not exclusive, embodiment, the shockproof components 2 of the spool 11 are rectangular and have the same size.

It is understood that, alternatively and/or additionally, a row may comprise a single shockproof component 2.

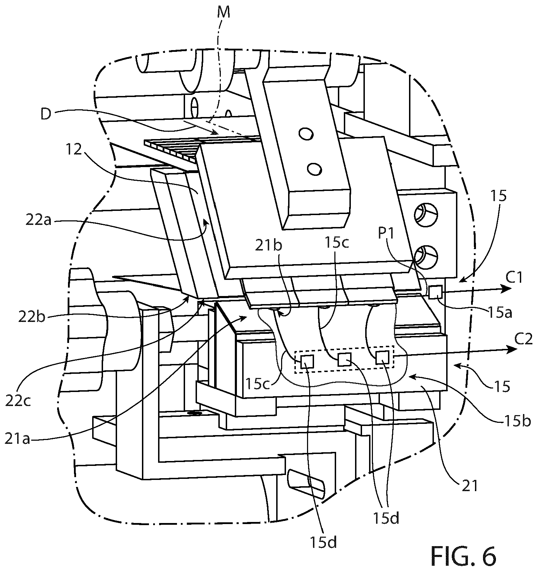

According to the embodiment shown in Figures 1 and 6, the system 1 further comprises a feeding assembly 13 which is preferably supported by the frame 9 and is configured to unwind the spool 11 in a controlled manner and on command, so as to move the unwound film 12 along a pre-established feeding path from the reel 10 to a pick-up station 14. The pick-up station 14 is configured so that the shockproof components 2 are separated from the film 12 (as detailed below) in order to be firmly fixed to/mounted on the lamp body 4 of the automotive lighting appliance.

According to the embodiment shown in Figures 1, 2 and 6, the feeding path comprises an end section T in which the feeding assembly 13 moves the film 12 along a feeding direction D (towards the pick-up station 14) parallel to the middle longitudinal axis M.

According to a possible embodiment shown in Figures 1 and 2, the feeding assembly 13 can be equipped with a set of rollers 18 coupled to the support frame 9 along the feeding path. According to a possible exemplary embodiment shown in the accompanying figures, the feeding assembly 13 may comprise one or more rollers 18, which are mounted on the support frame 9 to rotate in a freely rotatable manner, i.e. idly, around the respective axes and are designed to keep the film 12 tensioned along the feeding path at least between the reel 10 and the pick-up station 14. The feeding assembly 13 also comprises at least one motorized roller 18, which is mechanically connected to an electric drive unit 19. The drive unit 19 may be, for example, an electric motor having the drive shaft connected to the roller 18 to rotate it. Preferably, the electric drive unit 19 may conveniently comprise an electric motor. The electric motor may be, for example, of the "stepper" type.

According to the embodiment shown in Figure 1, the system 1 further comprises an electronic control system 17. The electronic control system 17 can include an electronic control unit 20 which is configured to control the feeding assembly 13. According to the embodiment shown in Figure 1, the electronic control unit 20 is configured to control the drive unit 19 so that the film 12 can be moved automatically, and preferably step-by-step (as detailed below), along direction D towards the pick-up station 14.

As will be described in detail below and with reference to the example shown in Figures 4 and 6, the shockproof components 2 are separated in an orderly and selective manner, one after the other, from a respective end row F of the film 12 when the film 12 is stationary and the end row F is in a pre-established position P1 in the pick-up station 14.

In the example shown, the end row F corresponds to the front row of the shockproof components 2 which is most advanced on the tape of the film 12 in the pick-up station 14, along the feeding direction D. In the example shown, in which the shockproof components 2 are arranged on the film 12 in a continuous geometric matrix arrangement consisting of side-by-side rows and columns, the end row F is represented by the side of the matrix of shockproof components 2 which is on the front part of the film 12 in relation to the feeding direction D, at or in the pick-up station 14.

According to a preferred embodiment shown in Figures 1, 2, 4-6, the electronic control system 17 further comprises an electronic detection system 15, which is configured to detect /determine a correct film positioning condition when the end row F of the shockproof components 2 on the film 12 has reached the pre-established pick-up position P1 in the pick-up station 14 (Figure 6).

The electronic detection system 15 can also be configured to generate a first signal C1 when it detects the correct positioning condition.

According to a preferred embodiment shown in Figures 4 and 6, the electronic detection system 15 may also be configured to determine the presence and/or absence of shockproof components 2 in the end row F. More preferably, the electronic detection system 15 may also be configured to determine the presence and/or absence of each shockproof component 2 of the shockproof components 2 forming the end row F. The presence and/or absence of each shockproof component 2 in the end row F is indicative of the position of the shockproof component 2 along the end row F itself.

The electronic detection system 15 is also configured to generate a second signal C2 indicating the shockproof components 2 that are present in and/or absent from the end row F, preferably indicating the presence and/or absence of each shockproof component 2 in/from the end row F.

According to the present invention, the electronic control unit 20 can be configured to control the feeding assembly 13 on the basis of the first signal C1. It is understood that, alternatively and/or additionally, the electronic control unit 20 may also be configured to control the feeding assembly 13 on the basis of the second signal C2.

Preferably, the electronic control unit 20 is configured to control the feeding assembly 13 on the basis of the first signal C1, so as to automatically move the film 12 along the feeding path in direction D to make the end row F reach the pre-established pick-up position P1. The electronic control unit 20 is configured to control the feeding assembly 13 on the basis of the first signal C1, so that the forward movement of the film 12 automatically stops when the end row F reaches the pick-up position P1. In other words, the electronic control unit 20 is configured to automatically move the film 12 along the feeding path in direction D and stops this movement when the detection system 15 determines/detects that the end row F has reached the pick-up position P1, that is, when the correct film positioning condition is met.

Preferably, the electronic control unit 20 is also configured to control the feeding assembly 13 so that, when the film 12 is stationary and all the shockproof components 2 of the end row F have been separated from the film 12, i.e., when the end row F is empty, it activates the movement of the film 12 along the feeding path in direction D.

According to a possible exemplary embodiment, the electronic control unit 20 can be configured so that, when the film 12 is stationary and it detects that all the shockproof components 2 of the end row F have been separated from the film 12, i.e., when the end row F is empty, it activates a movement of a pre-established length and automatically stops the movement when the shockproof components 2 have been moved along the feeding path by a length equal to the above pre-established length. If the electric motor of the feeding assembly 13 is a stepper motor, the motor feed step can correspond to the pre-established length.

According to a possible embodiment shown in Figures 4, 5 and 6, the electronic detection system 15 may comprise optoelectronic detector devices 15a. Preferably, the optoelectronic detector devices 15a may comprise photoelectric devices configured to generate the first signal C1. More preferably, the optoelectronic detector devices 15a may comprise one or more photocells arranged in the pick-up station 14 in the pick-up position P1. Even more preferably, the photocells can emit/receive LASER signals, be arranged on one or more sides of the pick-up station 14, and be oriented so that they can detect when the end row F reaches the pick-up position P1.

According to a possible embodiment, the electronic detection system 15 further comprises optoelectronic detector devices 15b, which are configured to detect the presence or absence of a related shockproof component 2 of the end row F when the end row F has reached the pick-up position P1.

According to a possible exemplary embodiment, the optoelectronic detector devices 15b can be arranged in the pick-up station 14 so that they are positioned below the film 12 in such a position that each optically intercepts a relevant shockproof component 2 of the end row F. According to a possible embodiment, the optoelectronic detector devices 15b can generate LASER signals. According to a possible embodiment, the optoelectronic detector devices 15b can be arranged in a box-shaped casing 21 connected to the support frame 9 in the pick-up station 14.

According to a possible exemplary embodiment shown in Figures 4, 5 and 6, the box-shaped casing 21 has a top wall 21a which substantially faces the film 12 in the pick-up station 14. The optoelectronic detector devices 15b can comprise respective optical fibres 15c which extend, at least partially, inside the box-shaped casing 21 and have respective detection ends, which are arranged, aligned with each other, in respective through openings 21b obtained in the pick-up surface 21a of the casing 21 and face the end row F of the film 12. The detection ends of the optical fibres 15c and the respective through openings can be arranged adjacent to the film 12 in the pick-up station 14 so that they can detect the presence/absence of respective shockproof components 2 in the end row F of the film 12. The optoelectronic detector devices 15b can further comprise sensor devices 15d, which are optically coupled to the optical fibres at the ends opposite the detection ends and are configured to emit/receive light signals to/from the optical fibres in order to generate the second signal C2 on the basis of the light signals themselves.

With reference to Figures 1, 2, 7-9, the system 1 also includes a gripping device 16 which is configured to selectively pick up a shockproof component 2, which is present in the end row F of the film 12 that is stationary in the pick-up station 14, so that it is separated from the film 12.

According to a preferred embodiment, the gripping device 16 comprises a vacuum gripping tool, which is connected to a vacuum generator 24, such as a suction pump or pressure relief device, e.g., via an air duct (which is preferably flexible), and is designed to pick up/separate, through suction, the shockproof component 2 from the film 12 and/or the remaining shockproof components 2.

According to the embodiments shown in Figures 1, 2, 7-9, the gripping device 16 is fitted with a gripping head 16a, and is configured so that it can be operated, preferably in response to a command, to pick up, via the gripping head 16a, a shockproof component 2 so as to separate it from the film 12 and/or the other adjacent shockproof components 2, in order to hold it against the gripping head 16a itself. Preferably, the command can be generated when the gripping head 16a is substantially in contact with, resting on, the shockproof component 2 to be picked up.

According to a possible embodiment, the gripping device 16 is further configured to be operated, preferably in response to a command, to stop the temporary retention of the shockproof component 2 by the gripping head 16a, to cause the shockproof component 2 to be separated from the gripping head 16a itself. Preferably, the command can be generated during the mounting of the shockproof component 2, when the shockproof component 2 has been positioned resting on the mounting area 8 of the lamp body 4.

With reference to Figure 2, according to a possible embodiment, the feeding member 13 is configured to feed the film 12 along an end section T of the feeding path adjacent to, and immediately upstream of, the pick-up station 14 which lies in a conveniently approximately horizontal feed plane.

According to a possible embodiment shown in Figures 1, 2, 5, and 6, the pick-up station 14 comprises a plate 22, which is arranged on the support frame 9 and lies in a plane inclined downward in relation to the horizontal feed plane.

The plate 22 is substantially rectangular and has an upper sliding wall 22a lying in the above-mentioned inclined plane, and a lower sliding wall 22b lying in an approximately horizontal plane below the sliding wall 22a.

According to a possible embodiment, the rollers 18 of the feeding member are arranged on the support frame 9 to keep the film 12 tensioned along the feeding path and in constant contact with the sliding wall 22a and the sliding wall 22b.

Conveniently, a grooved guide, in which the film 12 can slide, can be made on the sliding wall 22a. The grooved guide can have a width corresponding to that of the film 12 and is configured to keep the film 12 along the feeding path inside the pick-up station 14.

In particular, one or more rollers 18 are arranged upstream of the plate 22 to keep the film 12 tensioned along the feeding path and in contact as it slides on the sliding wall 22a, and other rollers 18 are arranged downstream of the plate 22 to keep the film 12 tensioned on the sliding wall 22b.

Conveniently, the sliding wall 22a and the sliding wall 22b are contiguous with each other, have a substantially horizontal common side, which is transversal to the feeding direction D, and are arranged in relation to each other so that together they form an edge 22c which is adjacent to, but separate from, one side of the plate 20.

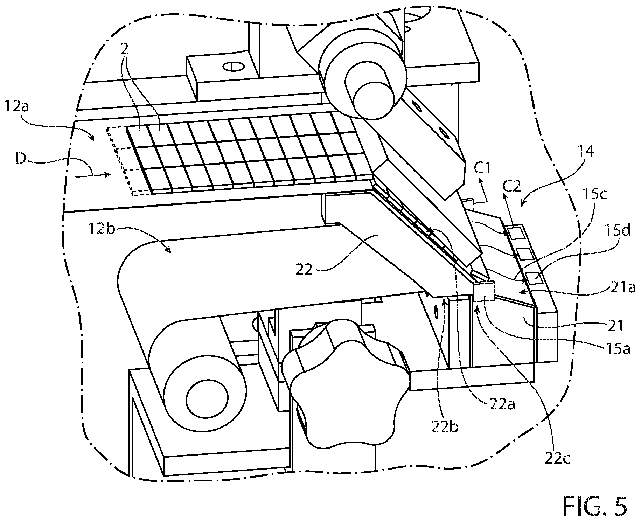

As shown in Figures 5 and 6, the edge 22c is configured to form an elbow-shaped section along the path of the film 12. The edge 22c therefore causes the end row F of shockproof components 2 to detach and separate automatically from the film 12. When the film 12, while moving, slides sequentially on the walls 22a and 22b, it bends on the edge 22c causing the end row F of the shockproof components 2 to detach from the film 12, before the end row F reaches the edge 22c itself. During the detachment from the film 12, the end row F continues its movement towards the top wall 21a and settles thereon. The top wall 21a is arranged slightly below the plate 22 so as to have one side facing the plate 22, which is immediately adjacent to the edge 12c.

It should be pointed out that the edge 22c causes the end row F of the shockproof components 2 to automatically detach from the film 12 because said film 12, being flexible, when passing on the edge 22c bends so that it remains adhered thereto, whereas the shockproof components 2 of the end row D, having a greater rigidity than the film 12, do not bend but substantially maintain the planar shape and continue to move as a whole so as to detach from the film 12 and settle on the adjacent top wall 21a.

Conveniently, the plate 22c and the top wall 21a together form a separating member 32 configured to automatically detach/separate the end row F of the shockproof components 2 from the film 12.

Conveniently, the surface of the top wall 21a on which the shockproof component 2 is deposited may have a non-stick and/or anti-friction material structured so as to prevent the adhesive surface of the shockproof component 2 from sticking to the top wall 21a.

Conveniently, the surface of the top wall 21a on which the shockproof component 2 rests can be coated/covered with a layer or tape of non-stick or anti-friction material. Preferably, the tape may comprise a one-sided adhesive support tape coated with a plurality of protruding silicone elements and/or a one-sided adhesive tape with a silicone rubber cloth backing and permanent acrylic adhesive. Preferably, the tape may be made of a polytetrafluoroethylene (PTFE) (Teflon)- and/or silicone-polytetrafluoroethylene-based material.

For example, the tape could be the tape called "DuploCOLL^{®} 19095" marketed by the company Lohmann GmbH & Co. KG, or the tape called "RWT2000" marketed by the company B.M.P. srl.

According to a possible embodiment shown in Figures 1, 2 and 3, the pick-up station 14 may further comprise an upper counterplate 23, which is connected to the support frame 9 and is arranged above the plate 22 in a position that is adjacent, facing, and approximately parallel to the sliding wall 22a below. The counterplate 23 is structured in such a way as to ensure that the film 12 is kept resting on the sliding wall 22a below.

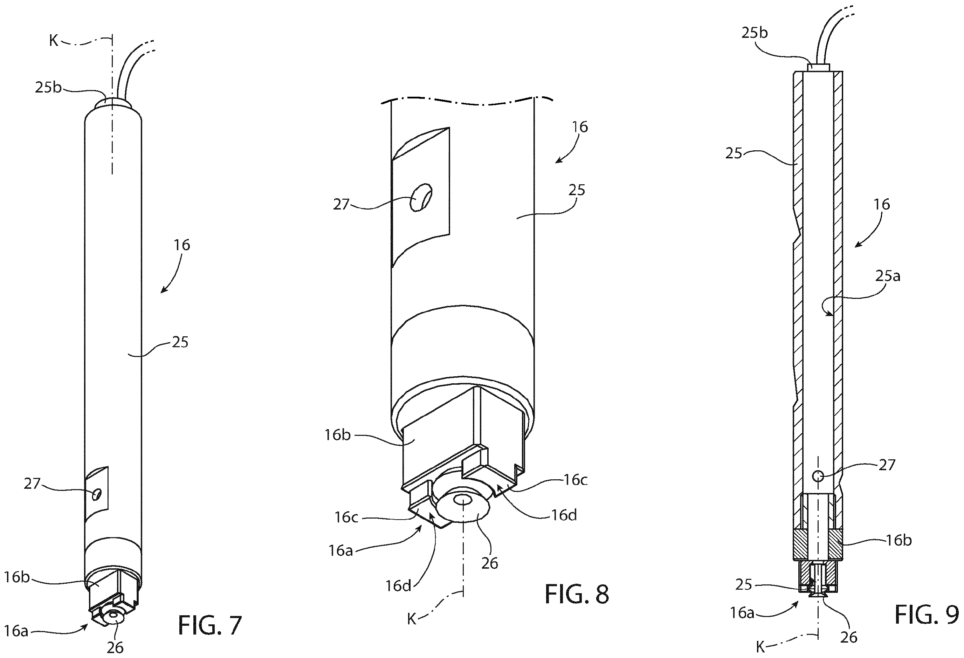

With reference to Figures 7, 8 and 9, the gripping device 16 comprises an outer casing 25 with a substantially tubular shape extending along a longitudinal axis K. According to a possible embodiment shown in Figures 7-9, the gripping device 16 comprises an inner chamber 25a extending within the casing 25 along the axis K and is in air communication with a first opening defined, for example, by a connector 25b connected to the vacuum generator 24 and to a through opening 25c in the gripping head 16a.

As shown in Figures 7-9, the gripping head 16a comprises a body 16b, which preferably, but not necessarily, is approximately parallelepiped in shape and has a flat rectangular surface orthogonal to the longitudinal axis K on which the through opening 25c is centrally obtained, which extends coaxially to the axis.

The gripping head 16a further comprises two protruding portions 16c, which extend cantilevered from the flat surface along the axis K and have respective support surfaces 16d on which, in use, the auxiliary component 2 arranges itself.

With reference to Figure 6, the gripping head 16a also centrally comprises a suction cup 26, which is firmly housed in the through opening and is in communication with the inner chamber 25a. The suction cup 26 is arranged centrally between the two protruding portions 16c, extends along the axis K so that it protrudes slightly from the support surfaces 16d and is structured so that it grips the shockproof component 2 when it is rested against it and the gripping device 16 is sucking.

In the example shown, the gripping device 16 further comprises a side hole 27 which is drilled through the casing 25 so that it is in communication with the inner chamber 25a of the casing 25 itself. In use, when the suction cup 26 is resting adherently on the face 2b of the component, the closing of the side hole 27 puts the suction of the vacuum station in direct communication with the suction cup 26 which then sucks the shockproof component 2, holding it against the surfaces 16d of the gripping head 16a.

Vice versa, the opening of the side hole 27 stops the suction through the suction cup 26, thereby causing the release, and therefore the separation of the shockproof component 2 from the gripping head 16a.

The following describes the method for mounting shockproof components 2 on an automotive lighting appliance 3, wherein it is assumed that in the initial step: the vacuum generator 24 is active, i.e., it generates suction in the inner chamber 25a, the hole 27 is open, the film 12 is stationary, and the end row F of the shockproof components 2 has not yet reached the pick-up position P1, for example, because it immediately precedes the row of the shockproof components just picked up from the film, and the gripping device 16 is of the manual type, that is to say that it can be gripped and controlled by an operator during the step of mounting the shockproof component 2.

In this step, the control unit 20 activates the feeding assembly 13 so that the film 12 and then the end row F move along the feeding path in direction D. During the movement, the film 12 bends at the edge 22c and causes the end row F of shockproof components 2 to separate from the face 12a of the film 12. During the detachment and forward movement of the film 12, the end row F continues its travel towards the top wall 21a and settles thereon. In this step, when the electronic detection system 15 detects that the end row F of shockproof components 2 has reached the pick-up position, it generates the first signal C1.

When the control unit receives the first signal C1, it determines that the end row F of shockproof components 2 has reached the pick-up position and commands the feeding member 13 to stop moving the film 12, which stops. In this condition, the end row F of shockproof components 2 is arranged on the top wall 21a, detached both from the film 12 and from the row of shockproof components preceding it (upstream), which is still on the film 12 and forms the next end row F, which will be detached from the film 12 in the next step.

The Applicant found that providing the film 12 with a feeding path passing on the plate 22 and on the edge 22c and placing the top wall 21a in a position that is separate from but adjacent to the edge 22c make it conveniently possible, on the one hand, for the end row F of shockproof components 2 to be automatically separated and detached from the film 12, and on the other hand, for the same shockproof components 2 to be automatically positioned on the pick-up surface 21.

In this step, the shockproof components 2 of the end row F arrange themselves above the openings 21b in the top wall 21a and their presence is then detected by the optoelectronic devices 15b. When the optoelectronic detector devices 15b detect the shockproof components 2 they generate the second signal C2 indicating the presence of each of them in the pick-up station 14.

According to the embodiment shown in Figures 1-11, the gripping device 16 is gripped and moved by the operator who performs the operation of selectively gripping a shockproof component 2 of the end row F by positioning the gripping head 16a against the shockproof component 2 to be picked up. In this step, the contact of the gripping head 16a with the shockproof component causes the face 2b of the shockproof component 2 to rest centrally on the suction cup 26, compressing it partially and laterally on the two support surfaces 16d.

The operator commands the suction, i.e., the gripping of the shockproof component by the gripping head 16a, via the gripping device 16, by closing the control hole 27. Closing the control hole 27 activates the vacuum in the inner chamber 25a and causes the suction of the shockproof component 2 by the suction cup 26 which grips it.

The gripping device 16 is then moved by the operator, who keeps the control hole 27 closed to retain the shockproof component 2 on the gripping head 16a and places the gripping head 16a against the lamp to mount the shockproof component 2.

In particular, the gripping head 16a of the gripping device 16 is arranged by the operator against the mounting area 8 of the lamp body 4 in order to fix the adhesive face 2a of the shockproof component 2 to the mounting area 8 itself.

When the shockproof component 2 is arranged in the mounting area 8, the gripping device 16 is deactivated by the operator who opens the control hole 27 and stops the suction through the suction cup 26 in order to release the shockproof component 2 fixed to the lamp body 4.

The steps described above relating to the mounting, i.e., the operations of gripping and releasing the shockproof components 2 of the end row F, are repeated while keeping the film 12 stationary as described above until all the shockproof components 2 of the end row have been picked up. The determination of this condition is carried out by the detection system 15 using the optical detector devices 15b. In particular, when the electronic control unit 20 determines, on the basis of the second signal C2, the absence of each of the shockproof components 2 of the end row F, it commands, via the feeding assembly 13, the film 12 to move forward towards the pick-up station until the new end row F of the shockproof components 2 of the film reaches the pre-established pick-up position P1. In this condition, all the above-described operations of the method are repeated.

The advantages of the system described above are many. Firstly, the time taken to mount the shockproof component on the lamp is reduced. The system drastically reduces the time required to pick-up and separate the shockproof component from the film. In fact, on the one hand, the system automatically places the shockproof components one row at a time in the pick-up position and, on the other hand, the gripping device, due to the shape of the gripping head, allows the shockproof component both to be quickly separated and picked up and to be released when it is mounted on the lamp.

In addition, the shape of the gripping head of the gripping device greatly reduces both the risk of damage to the shockproof component during handling and the risk of detachment thereof after it has been mounted on the lamp. In fact, the use of the gripping device reduces the risk of accidental contact of the operator with the adhesive surface of the shockproof component and the risk of manual deformation of the shockproof component.

It is clear that modifications and variations may be made to the lamp and method described and illustrated herein without departing from the scope of protection defined by the claims.

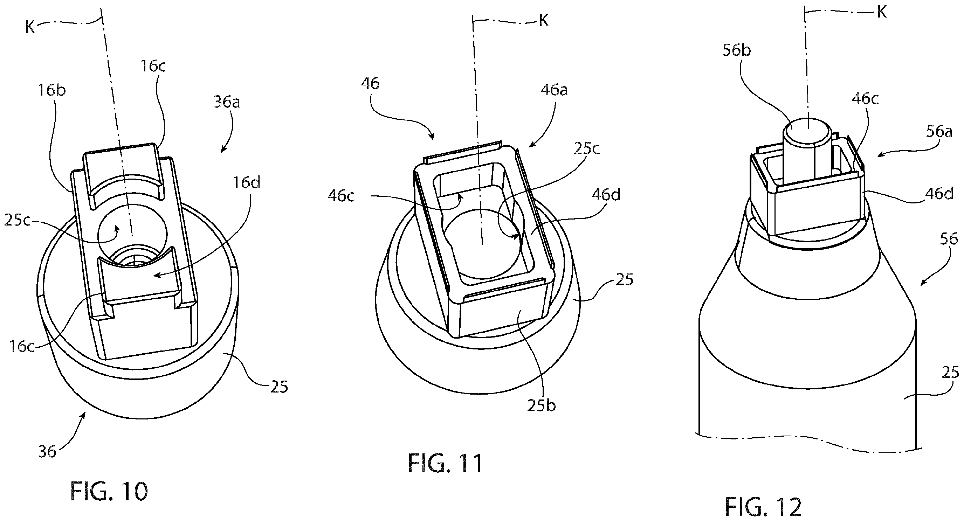

Figure 10 shows a gripping head 36a of a gripping device 36a of the system 1 which is similar to the gripping device 16 shown in Figures 7-9 and whose component parts will be identified, where possible, with the same reference numbers that identify corresponding parts of the gripping device 16.

In particular, the gripping head 36a of the gripping device 36 differs from the gripping head 16a of the gripping device 16 in that it lacks the suction cup 26. In this case, the closing of the side hole 27 causes a vacuum in the inner chamber 25 and a suction through the through opening 25c in the gripping head 36a, resulting in the suction and therefore the gripping of the shockproof component 2. Vice versa, the opening of the side hole 27 causes the vacuum in the inner chamber 25 to be stopped and the shockproof component 2 to be released by the gripping head 16a.

Figure 11 shows a gripping device 46 of the system 1 which is similar to the gripping device 16 shown in Figures 7-9 and whose component parts will be identified, where possible, with the same reference numbers that identify corresponding parts of the gripping device 16.

In particular, the gripping head 46a of the gripping device 36 differs from the gripping head 16a of the gripping device 16 in that it lacks the central suction cup 26 and the two protruding portions 16c. The gripping head 46a of the gripping device 36 also differs from the gripping head 16a of the gripping device 16 in that the body 25b has a rectangular inner seat 46c bounded laterally by a rectangular outer perimeter frame 46d. The dimensions of the perimeter frame 46d approximate those of the outer perimeter of the shockproof component 2 by excess. In use, when the gripping head 46a rests on the shockproof component 2, the perimeter frame 46d mechanically separates the shockproof component 2 from the adjacent shockproof components 2. When the gripping is commanded, the gripping device 46 sucks the shockproof component into the inner seat 46c.

Figures 12-15 show a gripping device 56 of the system 1 which is fitted with a gripping head 56a similar to the gripping head 46a of the gripping device 46 shown in Figure 11 and whose component parts will be identified, where possible, with the same reference numbers that identify corresponding parts of the gripping device 46.

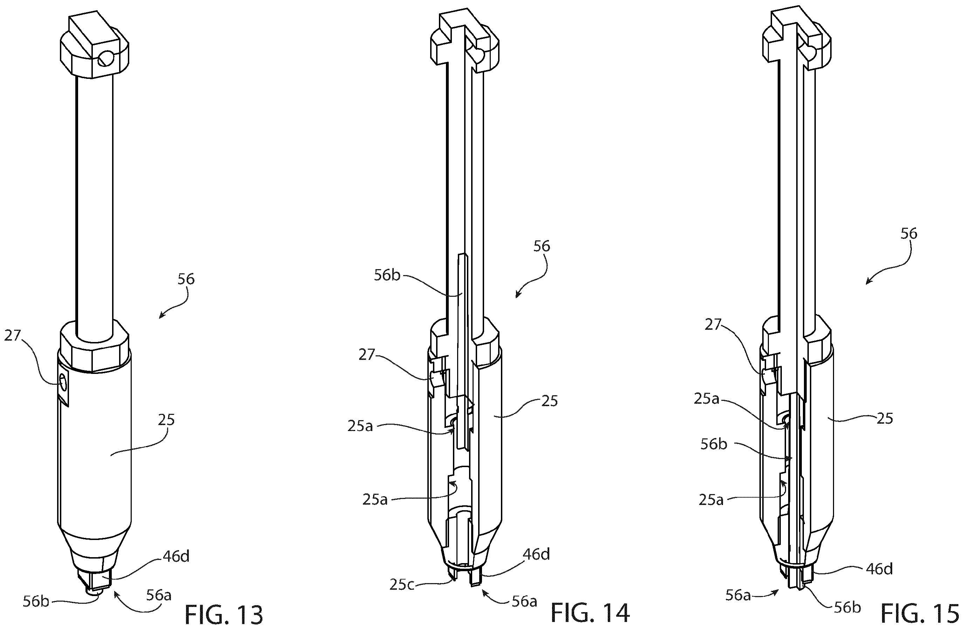

The gripping device 56 differs from the gripping device 46 in that it is equipped with a pusher member 56b which is configured to expel the shockproof component 2 on command from the inner seat 46c of the gripping head 56a. In the example shown, the pusher member 56a comprises a rod or piston which is mounted so that it can axially slide within the inner chamber 25a between a retracted position (shown in Figure 14), in which the pusher member 29 is arranged in the inner chamber 25a so that it does not protrude from the opening 25c, and an extracted position shown in Figures 12, 13 and 15, in which the pusher member 29 partially protrudes from the opening 25a in the seat 46c so that it pushes the shockproof body 2 out of the seat 46c.

The gripping device 56 also differs from the gripping device 46 in that the control hole 27 is in air communication with the inner chamber 25a so that the closing of the control hole 27 causes both the suction of air through the opening 25c and the movement of the pusher member to the retracted position.

The gripping device 56 also differs from the gripping device 46 in that the control hole 27 is in air communication with the inner chamber 25a so that the opening of the control hole 27 causes both the stopping of the suction of air through the opening 25c and the movement of the pusher member to the extracted position.

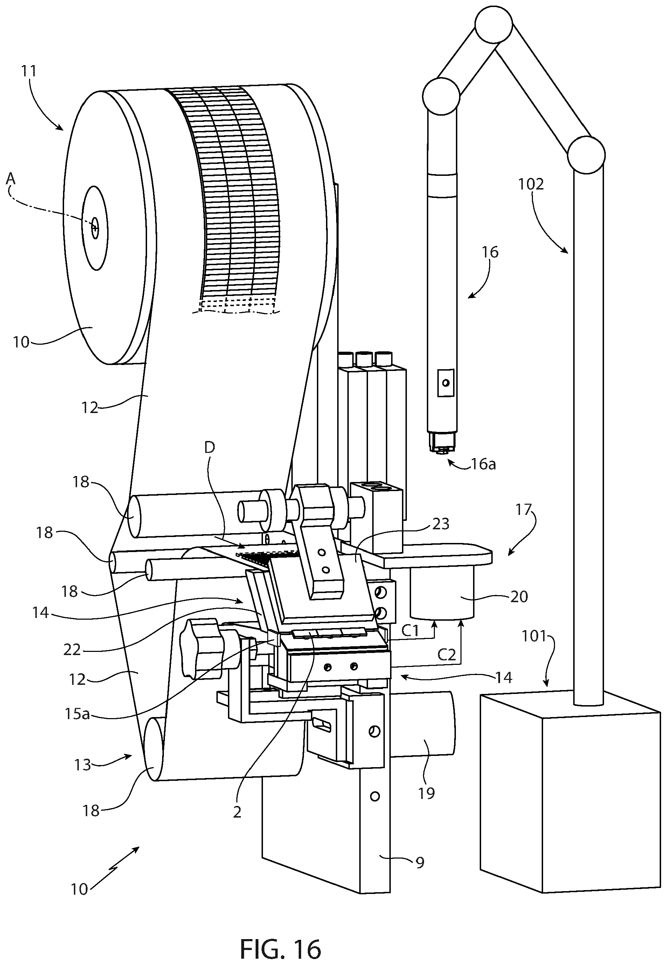

Figure 16 shows a system 100 similar to the system 1 shown in Figures 1 and 2 and whose component parts will be identified, where possible, with the same reference numbers that identify corresponding parts of the system 1.

The system 100 differs from the system 1 in that it comprises a robotic assembly 101 which is provided with a movable arm 102 that moves the gripping device 16.

The system 100 differs from the system 1 in that the electronic control unit 20 controls the robotic assembly 101 so as to guide the movement of the gripping device 16 when the shockproof component 2 is mounted on the lamp body 4. In particular, the electronic control unit 20 automatically controls the robotic assembly 101 so that the gripping device 16 is positioned with the gripping head 16a resting on the shockproof component 2 to be picked up after the end row F has been separated from the film 12 and controls the gripping device 16 to suck the shockproof component 2 from the pick-up station 14 so that it can be held by the gripping head 16a.

The electronic control unit 20 also controls the robotic assembly 101 in a fully automatic manner so as to move the gripping device 16, with the shockproof component 2 held by the gripping head 16a, from the pick-up station 14 to the lamp body 4 and guides the final movement of the gripping device 16 so that the gripping head rests on the mounting area 8 of the lamp body in order to fix the shockproof component 2.

The electronic control unit 20 also controls in a fully automatic manner the stopping of the suction in order to separate the shockproof component fixed to the lamp body from the gripping head 16. It is understood that in this embodiment the control of the movement of the robotic arm 102 can be carried out on the basis, for example, of a control system using images or sensors or according to a pre-established movement algorithm which provides for a pre-established positioning of the automotive lighting appliance and its contact areas 8.

## Claims

1. A method for mounting shockproof cushioning components (2) on a lamp body (4) of an automotive lighting appliance in respective pre-established mounting areas,
wherein said shockproof components (2) have a plate-like shape, a first adhesive face (2a) and a second opposite non-adhesive face (2b),
the method comprises the steps of:
providing a spool (11) comprising a tape-like film (12) wound around a rotation axis (A) and a plurality of shockproof components (2), which are arranged with the first face (2a) coupled to the film (12) and side by side to form adjacent rows extending transversely to a middle longitudinal axis (M) of the film (12),
unwinding the film (12) by means of a feeding assembly (13), moving it forward along a pre-established feeding path so that the rows of the shockproof components (2) are moved sequentially, on command, towards a pick-up station (14),
determining, during the movement of the rows of the shockproof components (2), by means of a detection system (15), a first condition, in which a pre-established end row (F) of said rows of the shockproof components (2) reaches a pre-established pick-up position (P1) in said pick-up station (14),
stopping the forward movement of the film (12) via said feeding assembly (3) when said first condition is determined in order to keep the end row (F) of the shockproof components (2) stationary in said pre-established pick-up position,
selectively picking up a shockproof component (2) from said end row (F) of the stationary film by means of a gripping device (16) fitted with a gripping head (16a) which sucks, on command, the second face (2b) of the shockproof component (2) in order to load it onto the gripping head (16a) itself,
arranging the gripping device (16) so that the first face (2a) of the shockproof component (2) loaded on the gripping head (16a) rests on the mounting area (8) of the lamp body (4) of the automotive lighting appliance,
stopping the suction exerted by the gripping head (16a) on the second face (2b) of the shockproof component (2) when the first face (2a) of the shockproof component (2) is resting on the mounting area (8) of the lamp body (4) of the automotive lighting appliance, in said position for mounting said shockproof component (2).

2. The method according to claim 1, comprising the step of automatically separating, as the film (12) moves forward along said feeding path, said end row (F) from said film (12) by means of a separating member (32) arranged in the pick-up station (14).

3. The method according to claims 1 or 2, comprising the steps of
determining, through the detection system (15), the presence/absence of each of the shockproof components (2) of said end row (F) in said pick-up station (14),
activating the movement of the film (12) along the feeding path via said feeding assembly (13) when a second condition is determined in which the detection system (15) has detected that all the shockproof components (2) of the end row (F) are absent,
stopping the forward movement of the film (12) via said feeding assembly (13) when said first condition is determined.

4. The method according to any one of the preceding claims, wherein
said gripping device (16) comprises an outer casing (25) with an oblong tubular shape extending along a first longitudinal axis (K), and an inner chamber (25a) extending within the casing (25) along the first longitudinal axis (K) and connected to a vacuum generator (26); the gripping head (16a) is arranged at a first longitudinal end of the casing (25) in communication with said inner chamber (25a),
the gripping device (16) is configured to activate and deactivate said gripping head (16a) in response to a command to suck or not to suck the shockproof component (2),
the method comprises the step of controlling the gripping device (16) so as to:
activate the suction to pick up said shockproof component (2) by means of said gripping head (16a),
deactivate the suction when the shockproof component (2) is resting on the mounting area of the lamp body (4) of the automotive lighting appliance so as to separate it from the gripping head (16a).

5. The method according to claim 4, wherein said gripping head (16) comprises a body (25b) having a flat rectangular surface orthogonal to the first longitudinal axis (K) on which a through opening (25c) is centrally obtained, which extends coaxially to the first longitudinal axis (K) and is in communication with said inner chamber (25a).

6. The method according to claim 5, wherein said gripping head (16a) further comprises two protruding portions (16c), which extend cantilevered from the flat surface of the body (25b) along the axis (K) on opposite sides of said opening (25c) and have, at the ends, respective support surfaces (16d) on which the auxiliary component 2 arranges itself during suction through said opening (25c).

7. The method according to claim 6, wherein said gripping head (16a) centrally comprises a suction cup (26), which is firmly housed in the through opening (25c) and is in communication with the inner chamber (25a); the suction cup (26) is arranged between the two protruding portions (16c), extends along the first longitudinal axis (K) so that it protrudes from the support surfaces (16c) and is structured so that it grips the shockproof component (2).

8. The method according to claims 5 or 6, wherein said gripping device comprises a pusher member (29), which is mounted so that it can axially slide within the inner chamber (25a) between a retracted position, in which the pusher member (29) is completely inside the inner chamber (25a), and an extracted position, in which the internal pusher member (29) partially protrudes from the opening (25c),
said method comprising the step of controlling the movement of the pusher member (29) from the retracted position to the extracted position to separate the shockproof body 2 held by said gripping head (16a).

9. A system for mounting shockproof cushioning components (2) on a lamp body (4) of an automotive lighting appliance in respective pre-established mounting areas (8), wherein said shockproof components (2) have a plate-like shape, a first adhesive face (2a) and a second opposite non-adhesive face (2b),
wherein the system comprises
a spool (11) comprising a tape-like film (12) wound around a rotation axis (A) and a plurality of shockproof components (2), which are arranged with the first face (2a) coupled to the film (12) and side by side to form adjacent rows extending transversely to a middle longitudinal axis (M) of the film (12),
a feeding assembly (13) configured to unwind the film (12) and move it forward along a pre-established feeding path so that the rows of the shockproof components (2) are moved sequentially, on command, towards a pick-up station (14),
a detection system (15) configured to determine, during the movement of the rows of the shockproof components (2), a first condition, in which a pre-established end row (F) of said rows of the shockproof components (2) reaches a pre-established pick-up position (P1) in said pick-up station (14), and to stop the forward movement of the film (12) via said feeding assembly (3) when said first condition is determined in order to keep the end row (F) of the shockproof components (2) stationary in said pre-established pick-up position,
a gripping device (16), which is fitted with a gripping head (16a) designed to suck, on command, the second face (2b) of the shockproof component (2) in order to load it onto the gripping head (16a) itself
and is configured to
arrange the first face (2a) of the shockproof component (2) loaded on the gripping head (16a) so that it rests on the mounting area (8) of the lamp body (4) of the automotive lighting appliance,
stop the suction exerted by the gripping head (16a) on the second face (2b) of the shockproof component (2) when the first face (2a) of the shockproof component (2) is resting on the mounting area (8) of the lamp body (4) of the automotive lighting appliance, in said position for mounting said shockproof component (2).

10. The system according to claim 9 comprising a separating member (32) configured to automatically separate, as the film (12) moves forward along said feeding path, said end row (F) from said film (12) in the pick-up station (14).

11. The system according to claims 9 or 10, comprising a detection system (15) configured to determine the presence/absence of each of the shockproof components (2) of said end row (F) in said pick-up station (14),
an electronic control system configured to
control said feeding assembly (13) to activate the movement of the film (12) along the feeding path when a second condition is determined in which the detection system (15) has detected that all the shockproof components (2) of the end row (F) are absent,
stop the forward movement of the film (12) via said feeding assembly (13) when said first condition is determined.

12. The system according to any one of the claims from 9 to 11, wherein
said gripping device (16) comprises an outer casing (25) with an oblong tubular shape extending along a first longitudinal axis (K), and an inner chamber (25a) extending within the casing (25) along the first longitudinal axis (K) and connected to a vacuum generator (26); the gripping head (16a) is arranged at a first longitudinal end of the casing (25) in communication with said inner chamber (25a),
the gripping device (16) is configured to activate and deactivate said gripping head (16a) in response to a command to suck or not to suck the shockproof component (2).

13. The system according to claim 12, wherein said gripping head (16) comprises a body (25b) having a flat rectangular surface orthogonal to the first longitudinal axis (K) on which a through opening (25c) is centrally obtained, which extends coaxially to the first longitudinal axis (K) and is in communication with said inner chamber (25a) .

14. The system according to claim 13, wherein said gripping head (16a) further comprises two protruding portions (16c), which extend cantilevered from the flat surface of the body (25b) along the axis K on opposite sides of said opening (25c) and have, at the ends, respective support surfaces (16d) on which the shockproof component (2) arranges itself during suction through said opening (25c).

15. The system according to claim 14, wherein said gripping head (16a) centrally comprises a suction cup (26), which is firmly housed in the through opening (25c) and is in communication with the inner chamber (25a); the suction cup (26) is arranged between the two protruding portions (16c), extends along the first longitudinal axis (K) so that it protrudes from the support surfaces (16c) and is structured so that it grips the shockproof component (2).
